# EUROPÄISCHE PATENTANMELDUNG

(11) **EP 4 592 709 A1**
(43) Veröffentlichungstag der Anmeldung: **30.07.2025**
(21) Anmeldenummer: 24000078.6
(22) Anmeldetag: 21.06.2024
(51) Int. Cl.: G01S 13/04, E01F 9/608, G01S 13/86, G01S 13/88, G01S 13/931, G08G 1/04, G08G 1/16, G01S 7/00

(54) **WILDWARNVORRICHTUNG MIT ENERGIESPARENDER DETEKTIONSEINHEIT**

(30) Priorität: 26.01.2024 CH 982024; 07.06.2024 CH 6152024
(71) Anmelder: Animot motion expert GmbH & Co KG, 2620 Neunkirchen (AT)
(72) Erfinder: Dahl, Sabine, 84184 Tiefenbach (DE)
(74) Vertreter: Alder, Hans Rudi

(57) **Zusammenfassung**

Bodenbasierte Wildwarnvorrichtung (1) mit einem optischen Signalgeber (5) zur Erzeugung von optischen Warnsignalen, welche eine energiesparenden Detektionseinheit (3) mit einer Erkennungs-Einheit (6) umfasst, wobei diese Erkennungs-Einheit (6) ein Miniatur-Radarsystem (11) aufweist, dessen abgestrahltes Strahlungssignal (12) zur Reduktion des Stromverbrauchs getaktet ist. Darüber hinaus weist diese Erkennungseinheit (6) zusätzlich ein optisches Sensorsystem (14). Eine elektronische Auswerte- und Steuereinheit (7) ist mit dieser Erkennungseinheit (6) gekoppelt, um die vom Miniatur-Radarsystem (11) und/oder dem mindestens einen optischen Sensorsystem (14) erfassten Signale elektronisch auszuwerten und zu kombinieren, und um bei Anwesenheit eines Wildtiers den optischen Signalgeber (5) zu aktivieren und/oder ein Funksignal zu erzeugen.

## Beschreibung

Die vorliegende Erfindung betrifft eine bodenbasierte Wildwarnvorrichtung zur Erzeugung von optischen Warnsignalen gemäss Oberbegriff des Anspruchs 1.

Solche Wildwarnvorrichtungen dienen der Erhöhung der Sicherheit im Strassenverkehr und werden direkt an den Strassenleitpfosten befestigt. Eine solche Wildwarnvorrichtung ist bspw. aus der WO2013/144312 bekannt und umfasst im Wesentlichen eine Detektionseinheit zur Erfassung von Wild, einen optischen Signalgeber um Verkehrsteilnehmer vor Wild zu warnen, ein Solarmodul zur autonomen Stromversorgung und eine Steuerelektronik. Bevorzugt weisen die Detektionseinheiten dieser Wildwarnvorrichtungen PIR-Sensoren (Pyroelektrischer Infrarot Sensor) auf, um in der Nähe sich aufhaltendes Wild zu erfassen. Diese Sensoren reagieren auf wechselnde Temperaturänderungen innerhalb ihres segmentierten Detektionsbereichs, welcher eine Reichweite von mindestens 25m und einen vertikalen Raumwinkel von mindestens 4° aufweist. Leider begrenzt die bei der vorgesehenen Anwendung vorgegebene Montagehöhe von ca. 1m und die sich im Einsatz oft ändernde Inklination der Strassenleitpfosten die Reichweite für diese Detektionseinheiten. Eine exakte und justierbare Ausrichtung der Detektionseinheit ist deshalb von Bedeutung.

Vor diesem Hintergrund ist auch schon vorgeschlagen worden den Detektionsbereich einer solchen Detektionseinheit mit Hilfe eines oszillierenden IR-Generators und einer ausrichtbaren Halterung für diese Detektionseinheit zu optimieren. Die Optimierbarkeit des Detektionsbereichs erweist sich in diesem Anwendungsgebiet als unerlässlich, insbesondere bei der Verwendung von massentauglichen, d.h. kostengünstigen Detektionseinheiten mit PIR-Sensoren und für die gleichzeitige Gewährleistung der Erfassungssicherheit mit solchen Detektionseinheiten. In bevorzugten Ausführungsformen werden diese Warnvorrichtungen mittels Lagesensoren undloder Kommunikationseinheiten automatisch ausgerichtet. Insbesondere lässt sich mit Hilfe einer einfachen Optik der Detektionsbereich in einfacher Weise einstellen, bspw. mit einem Azimut (horizontaler Detektionswinkel) von über 160° und einer Elevation (vertikaler detektionswinkel) von ca. 30°. Solche PIR-Sensoren eignen sich in besonderer Weise, insbesondere wegen ihres relativ geringen Stromverbrauchs, für die Verwendung in autonomen Wildwarnvorrichtungen, d.h. für die Erfassung von Wild und anderen wärmestrahlenden Lebewesen, die sich im Detektionsbereich quer zur optischen Hauptachse der PIR-Sensoren bewegen. Bewegungen in axialer Richtung, d.h. in Richtung der optischen Achse des Detektionsbereichs, lassen sich mit PIR-Sensoren leider nur schwer erkennen. Stehende Objekte können damit gar nicht erfasst werden. Darüber hinaus erfordern PIR-Sensoren eine ungestörte optische Sicht zum beobachteten Objekt und kann die Empfindlichkeit derselben durch Sichtbeschränkungen, bspw. durch starken Regen, beeinträchtigt werden.

Es sind deshalb auf dem Gebiet der Verkehrssicherheit auch schon Wildwarnsysteme, wie sie bspw. in der KR102140195 beschrieben werden, vorgeschlagen worden um den augenblicklichen und voraussichtlichen Aufenthaltsort von überwechselndem Wild mit Hilfe eines strassenbasierten Radarsystems zu erfassen. Diese Systeme errechnen die Wahrscheinlichkeit einer Kollision mit Hilfe eines neuronalen Netzwerks (Kl-System) und warnen die sich einer Gefahrenzone nähernden Fahrzeuglenker. Insbesondere lässt sich mit KI-Radarsystemen die Distanz eines Wildtiers zur Detektionseinheit relativ gut bestimmen (solange sich dieses im engen Erfassungsbereich des Radarsystems befindet) und eignen sich diese Kl-Radarsysteme deshalb in besonderer Weise dazu um festzustellen, ob sich ein Wildtier der Detektionseinheit direkt nähert oder sich von ihr entfernt. Leider sind diese Radarsysteme für die Verwendung an einem Strassenleitpfosten zu schwer (Verletzungsgefahr bei Unfall), weisen einen hohen Stromverbrauch auf und eignen sich diese Radarsysteme nicht besonders für die Erfassung von Wildtieren, die sich quer zur Detektionsachse bewegen (der Detektionswinkel der Radarsysteme wird mit zunehmender Distanz rasch kleiner).

Radarsysteme sind allgemein auf dem Gebiet der Fahrassitenzsysteme, bspw. aus der DE-10'2015'295`395, bekannt und finden ihre Verwendung vorzugsweise in der industriellen, d.h. robotergestützten Fertigung, aber auch in der Sicherheits- und Überwachungstechnik im Alltag oder Militär. Für deren Verwendung im rollenden Strassenverkehr weisen diese Systeme einen Detektionsbereich von ca. 15° x 114° und eine relativ grosse Reichweite von typischerweise 60 m auf. Damit lassen sich die Entfernung, Geschwindigkeit undloder Bewegungsrichtung von bewegten Objekten erfassen. Leider eignen sich diese bekannten Radarsysteme zwar für die Verwendung in Fahrzeugen jedoch nicht für die Verwendung in strassentaugliche Wildwarnvorrichtungen, insbesondere weil diese Radarsysteme einen unerwünscht hohen Betriebsstrom von in der Regel zwischen 30 mA und 40 mA, eine komplizierte Auswertungselektronik, unerwünscht schwer (ca. 20 g - 30 g) und unverhältnismässig kostspielig sind. Die Aussenmasse dieser bekannter Radarsysteme liegen bei bspw. 20 mm x 70 mm x 12.2 mm.

Es ist deshalb Aufgabe der vorliegenden Erfindung eine strassentaugliche, d.h. bodenbasierte (ground-based) und verlässliche Wildwarnvorrichtung mit niedrigem Energiebedarf zu schaffen, welche Bewegungen von Wild undloder Menschen entlang eines Strassenverlaufs sowohl quer zur Detektionsrichtung, als auch in axialer Detektionsrichtung sicher erfassen kann.

Diese Aufgabe wird erfindungsgemäss mit einer bodenbasierten Wildwarnvorrichtung mit den Merkmalen des vorliegenden Anspruchs 1 gelöst. In Überwindung eines Vorurteils auf dem Gebiet der Strassensicherheit schlägt die vorliegende Erfindung vor, den Stromverbrauch eines Radarsystems bekannter Art durch einen getakteten Betrieb desselben derart zu senken, dass sich dieser für die gewünschte Verwendung eignet, d.h. einen Strombedarf von weniger als 5mA aufweist.

Diese Wildwarnvorrichtung ist an einer tragenden Struktur in Strassennähe, bspw. an einem Strasseneltpfosten, befestigbar und umfasst einen optischen Signalgeber für den sich nähernden Verkehr und eine Detektionseinheit mit einer Auswerte- und Steuerelektronik für diesen optischen Signalgeber sowie eine autonome Stromversorgung, insbesondere mit einem Akku und einem Solarmodul dazu. Erfindungsgemäss weist die Detektionseinheit dieser Wildwarnvorrichtung ein Miniatur-Radarsystem auf, dessen emittiertes Signal (Primärsignal) getaktet ist, um den Stromverbrauch zu reduzieren. Dieses getaktete Primärsignal weist eine Folge von, in einer vorgegebenen Frequenz, getakteten Strahlungsimpulsen (Sendepulse) auf. In einer Weiterbildung dieser Detektionseinheit weist dieses Primärsignal zwei unterschiedliche Folgen von getakteten Sendepulsen auf, vorzugsweise, aber nicht notwendigerweise, mit derselben Taktfrequenz. Es versteht sich, dass das Primärsignal mit einer gesetzlich erlaubten Strahlungsfrequenz zwischen 24.0 GHz und 24.25 GHz im CW-Modus oder FSK-Modus emittiert werden kann. In einer bevorzugten ersten Ausführungsform umfasst der Miniaturradar ein erstes Sensorsystem, welches bei einem getakteten Primärsignal und einem Duty-Cycle von ca. 1:30 (mit bspw. einer aktiven Zeit von ca. 20 µs und einer Ruhepause von ca. 580 µs) und bei einer Reichweite von ca. 30 m einen Strombedarf von ca. 2.5 mA oder weniger aufweist. Diese Ausführungsform erlaubt deshalb auch die gleichzeitige Verwendung von zwei solchen Sensorsystemen, insbesondere um den Detektionsbereich zu vergrössern, ohne für die Stromversorgung unerwünscht mehr als 5 mA zu benötigen. Bei einer solchermassen erweiterten Ausführungsform weist das Miniatur-Radarsystem bei zwei versetzt getakteten Primärsignalen mit einer Strahlungsfrequenz von 24.0 GHz < f < 24.25 GHz und einem Duty-Cycle von ca. 1:30 (mit bspw. einer aktiven Zeit von ca. 20 µs und einer Ruhepause von ca. 580 µs) und bei einer Reichweite von ca. 30m einen Strombedarf von ca. 5 mA oder weniger auf.

In einer bevorzugten Ausführungsform ist mit Hilfe einer Antennen-Anordung dieses Miniatur-Radarsystems ein erster Erfassungsbereich mit einem Azimut von wesentlich über ca. 80° und einer Elevation von wesentlich über ca. 15° erzielbar.

In einer weiterführenden Ausführungsform der vorliegenden Erfindung ist der Detektionsbereich in bekannter Weise mit Hilfe einer einstellbaren Befestigungsvorrichtung an die Topographie des Strassenverlaufs und die Inklination der tragenden Struktur anpassbar, d.h. ist justierbar, insbesondere mechanisch ausrichtbar.

Es versteht sich, dass der Fachmann auf dem Gebiet der Verkehrssicherheit die bekannten Nachteile von Radarsystemen weiter reduzieren möchte. In einer bevorzugten Ausführungsform der vorliegenden Erfindung wird deshalb die vorliegende Wildwarnvorrichtung zusätzlich mit bilderfassenden Sensoren, bspw. mit mindestens einem PIR-Sensorsystem oder mindestens einem Kamerasystem, vorzugsweise einem IR-Kamerasystem mit reduzierter Pixeldichte, und/oder mit einem zweiten Erfassungsbereich, kombiniert, um nicht nur die mit dem Radarsystem erfassten Bewegungen von Wildtieren frontal zur Detektionsrichtung, sondern auch deren Bewegungen quer zur Detektionsrichtung sieher zu erfassen. Der Aufbau und die elektronische Schaltung solcher Sensorsysteme sind dem Fachmann grundsätzlich bekannt, bspw. aus CN116699604 oder WO2023/022948. Vorliegend wird das Eingangs-Signal eines PIR-Sensorsystems mit demjenigen eines Miniatur-Radarsystems derart elektronisch verschaltet (kombiniert), dass ein sich im kombinierten Erfassungsbereich dieser Systeme (Radar, Kamera, PIR) befindendes Wildtier unabhängig von seiner evt. intermittierenden Bewegung und Bewegungsrichtung sicher erkannt wird. Darüber hinaus lässt sich durch die Verwendung eines PIR-Sensorsystems und mit Hilfe einer elektronischen Kombination der Eingangs-Signale beider Systeme (Radar, PIR) das Auflösungsvermögen (Messgenauigkeit) der vorliegenden Wildwarnvorrichtung (bspw. unter Zuhilfenahme von spezifischen optischen Werten, wie Spektralwerte, etc.) deutlich verbessern.

In einer modernen Ausführungsform werden die erfassten Bild- und Radardaten mit Hife einer Kl-gestützten Software aufbereitet/ausgewertet, wie dies bspw. aus der CN117557979 bekannt ist, um nicht nur die aktuelle Position des Zielobjektes, sondern auch dessen Identifizierung und voraussichtliche Bewegungsrichtung zu bestimmen.

In einfacher Weise lässt sich die vorliegende Wildwarnvorrichtung mit einem akustischen undloder optischen Sensorsystem elektronisch kombinieren, um die Sicherheit bei der Erfassung eines Wildtiers weiter zu verbessern und um herannahende Fahrzeuge mit einem optischen Warnsignal undloder einem Funksignal vor der Anwesenheit eines Wildtiers zu warnen.

Mit dem hier verwendeten Begriff bodenbasiert soll eine Vorrichtung in Bodennähe, d.h. etwa in Höhe eines Strassenleitpfostens (in der Regel etwa 1 m) verstanden werden. Es versteht sich, dass diese Vorrichtungen strassentauglich, d.h. robust, geschützt, effizient, zuverlässig, kostengünstig, leichtgewichtig, langlebig, etc., sein müssen.

Die vorliegend genannte Detektionseinheit soll hier als Teil der Wildwarnvorrichtung verstanden werden und umfasst eine Erkennungseinheit (recognition) mit mindestens einem Miniatur-Radarsystem sowie eine damit gekoppelte Auswerte- und Steuerelektronik für die Aktivierung eines optischen Signalgebers.

Es versteht sich, dass diese Miniatur-Radarsysteme vorzugsweise mehrere Radarsysteme mit Sende- und Empfangselektronik, d.h. mit Antennen-Arrays zum Senden und Empfangen von Strahlungssignalen und dazugehörige Mikrocomputer für die Ansteuerung und Analyse (Fouriertransformationen) dieser Signale aufweisen. Miniatur-Radarsysteme und deren Funktionsweise sind bspw. aus Überwachungssystemen grundsätzlich bekannt und zeichnen sich durch ihre minimalisierte Dimensierung und geringe Sendeleistung aus. Miniatur-Radarsysteme bekannter Art erfordern für das Emittieren und Empfangen der Radarstrahlung einen Betriebsstrom von ca. 18mA und weisen Aussendimensionen von ca. 25mm x 25mm x 7mm und weniger auf.

Unter dem Begriff Erfassungsbereich soll hier ein geometrischer Bereich verstanden werden, innerhalb welchem die Wildtiere, etc. von der Detektionseinheit sicher erkannt werden. Es versteht sich, dass dieser Bereich von der Sendeleistung und dem Auflösungsvermögen der Detektionseinheit Sensoren, und allfälligen Umwelteinflüssen abhängig ist, d.h. sich vom leistungsspezifischen Detektionsbereich der Detektionseinheit unterscheidet.

Der Begriff Detektionsrichtung bezeichnet hier die Axialrichtung der Hauptkeule des Detektionsbereichs eines Radarsystems, welche bei der vorliegenden Anwendung in der Regel einer vom Strassenverlauf um ca. 45° bis 90° abgewandten Richtung entspricht. Mit einer geeigneten Auffächerung der Hauptkeule kann ein Erfassungswinkel von bis zu ca. 180° ermöglicht werden.

Die Vorteile der erfindungsgemässen Vorrichtung zur Erfassung von sich näherndem Wild sind dem Fachmann unmittelbar ersichtlich und insbesondere in dem geringen Stromverbrauch (max. 5mA) - auch Dank der Ausrichtbarkeit der Detektionseinheit - sowie in der guten Auflösung von ca. 40cm x 40cm (Frontalbild), resp. von ca. 120cm x 40cm (seitlich) bei einem PIR-Sensorsystem, sowie in der verbesserten Erfassungssicherheit durch die Kombination eines Radarsystem mit einem PIR-Sensorsystem, zu sehen. Insbesondere lässt sich mit einer solchen Kombination die intrinsische Temperatursensibilität und geringe axiale Messempfindlichkeit der PIR-Sensoren kompensieren. Die Verwendung einer KI-basierten Software für die Auswertung der detektierten Signale bietet sich an.

Im Folgenden soll die Erfindung anhand eines Ausführungsbeispiels und mit Hilfe der Figuren näher erläutert werden. Dabei zeigen:
- Fig.1:: schematische Darstellung des Strahlungsdichtespektrums eines Radarsystems bekannter Art;
- Fig. 2:: schematische Darstellung zur emittierten Strahlung eines erfindungsgemässen Radarsystems;
- Fig. 3:: schematische Darstellung zur räumlichen Verteilung des Detektionsbereichs eines erfindungsgemäss getakteten Radarsystems;
- Fig. 4:: schematische Darstellung zur Verwendung einer erfindungsgemässen Vorrichtung.

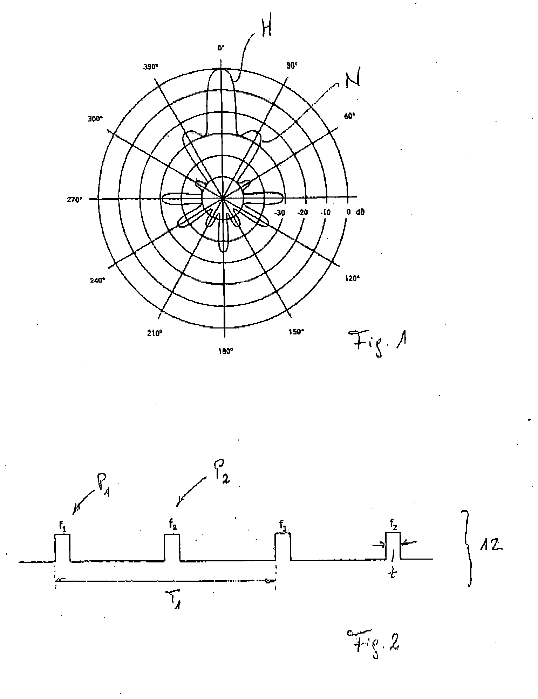

Das im Fig. 1 schematisch dargestellte Polardiagramm macht das Strahlungsdichtespektrums eines Radarsystems bekannter Art deutlich. Dieses Strahlungsdichtespektrum zeigt eine Hauptkeule H bei einem Strahlungswinkel von 0° und deren maximale Reichweite bis zur Signalabschwächung auf 0dB. Verschiedene Nebenkeulen N bei unterschiedlichen Strahlungswinkeln zeigen eine wesentlich geringere Reichweite und sind für die vorliegende Erfindung nicht von Bedeutung. Die Verteilung dieses Strahlungsdichtespektrums bestimmt den Detektionsbereich, resp. den damit erzielbaren Erfassungsbereich, und lässt sich vom Fachmann in gewünschter Weise gestalten. Da heutige Radarsysteme nicht nur eine einzelne Antenne, sondern einen Antennen-Array (mit mehreren Hauptkeulen) aufweisen, kann das Strahlungsdichtespektrum vom Fachmann mit Hilfe unterschiedlich gestalteter Antennen und unterschiedlichen Betriebsfrequenzen derselben stark variiert werden.

Fig. 2 zeigt eine schematische Darstellung zum erfindungsgemäss getakteten Primärsignal P₁, P₂ des Radarsystems 12. Bei dieser Ausführungsform weist das Radarsystem 12 ein Antennensystem in Form eines Antennen-Arrays auf. Das damit emittierte Primärsignal 12 weist erfindungsgemäss mindestens eine Folge von getakteten Sendepulsen P₁, P₂ mit einer vorgegebenen Taktperiode T₁, T₂ auf, wobei die einzelnen Sendepulse P₁, P₂ unterschiedliche Sendefrequenzen f₁, f₂ aufweisen können und unterschiedlich getaktet sein können. In einer speziellen Ausführungsform weist das getaktete Primärsignal 12 im CW-Modus (continous wave) zwei Folgen von getakteten Sendeimpulsen P₁, P₂ auf, deren Taktperioden T₁, T₂ gleich gross sind, d.h. T₁ = T₂ ist. In einer weiteren Ausführungsform weist das getaktete Primärsignal 12 im FSK-Modus (frequency shift keying) zwei Folgen von getakten Sendeimpulsen P₁, P₂ auf, deren Taktperioden T₁, T₂ ungleich gross sind, d.h. T₁ ≠ T₂ ist.

Es versteht sich, dass durch die Taktung des Primärsignals das Signal/Noise-Signalverhältnis verringert wird, d.h. die Reichweite und Breite des gewünschten Detektionsbereichs, resp. des damit verbundenen Erfassungsbereichs reduziert wird. Jedoch kann dieser Verlust durch die Verwendung mehrerer Radarsysteme kompensiert werden, was jedoch andererseits zu erhöhtem Strombedarf führt.

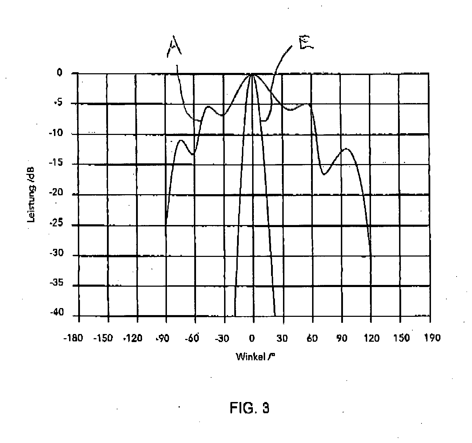

Die in Fig. 3 gezeigte schematische Darstellung macht die Winkelverteilung des Detektionsbereichs einer spezifischen Ausführungsform des erfindungsgemässen Radarsystems deutlich, bei welcher für den Detektionsbereich ein Azimutwinkel A von bis zu ca. 60° bei einem Elevationswinkel E von ca. 30° realisierbar ist. Diese spezifische Ausführungsform umfasst lediglich ein Radarsystem, welches bei einem getakteten Primärsignal f₁ mit einer Strahlungsfrequenz von 24.0GHz < f₁ < 24.25 GHz und einem Duty-Cycle von ca. 1:30 (mit bspw. einer aktiven Zeit von t = 20µs und einer Ruhepause von T-t = 580µs) und mit einer Reichweite von ca. 30m einen Strombedarf von ca. 2.5 mA oder weniger aufweist.

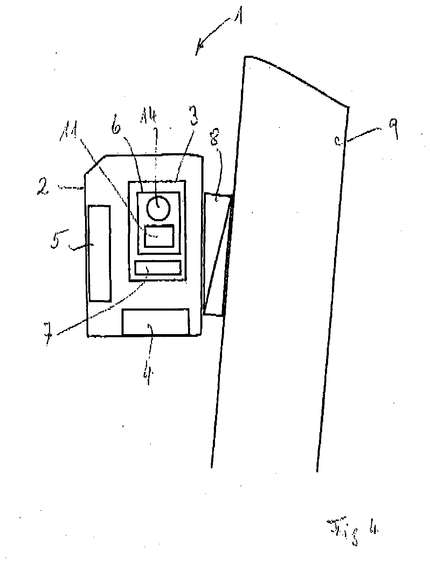

Fig. 4 zeigt eine schematische Darstellung einer bodenbasierten Wildwarnvorrichtung 1 zur Erzeugung von optischen Warnsignalen unter Verwendung einer erfindungsgemässen Vorrichtung, welche Wildwarnvorrichtung 1 eine Gehäuse-Baugruppe 2 umfasst, welche eine Detektionseinheit 3, eine mit dieser Detektionseinheit 3 verbindbare Stromversorgungseinheit 4, insbesondere eine autonome Stromversorgungseinheit mit einem Solarmodul und einem Akku, und einen mit dieser Detektionseinheit 3 gekoppelten optischen Signalgeber 5 aufweist. Dabei umfasst die Detektionseinheit 3 mindestens eine Erkennungseinheit 6 (recognition) und eine Auswerte- und Steuerelektronik 7. Die Erkennungseinheit 6 weist mindestens ein Miniatur-Radarsystem 11 auf, dessen emittierte Strahlung, d.h. dessen Primärsignal 12 zur Reduktion des Stromverbrauchs getaktet ist. Dieses Radarsystem 11 ist mit der Auswerte- und Steuerelektronik 7 gekoppelt, um die von diesem Radarsystem 11 erfassten Signale elektronisch auszuwerten und bei Anwesenheit eines Wildtiers den optischen Signalgeber (5) zu aktivieren, um ein an herannahende Fahrzeuge gerichtetes optisches Warnsignal undloder ein Funksignal zu erzeugen.

In einer bevorzugten Ausführungsform weist die Erkennungseinheit 6 der vorliegenden Wildwarnvorrichtung ein optisches Sensorsystem 14 auf, vorzugsweise ein PIR-System mit einem zweiten Detektionsbereich. Dieses optische Sensorsystem 14 ist ebenfalls mit der Auswerte- und Steuereinheit 7 gekoppelt, um die von diesem Sensorsystem 14 erfassten Signale elektronisch auszuwerten und mit den erfassten Signalen des Radarsystems 11 zu kombinieren. Es versteht sich, dass die Auswerte- und Steuereinheit 7 eine Ki-basierte Elektronik aufweisen kann, um ein Zielobjekt (vorzugsweise ein Wildtier) bei Anwesenheit zu identifizieren, resp. dessen Bewegungsrichtung zu prognostizieren und gegebenenfalls den optischen Signalgeber 5 aktivieren, resp. ein optisches Warn- undloder Funksignal zu erzeugen.

In einer Weiterbildung der erfindungsgemässen Wildwarnvorrichtung umfasst die Erkennungseinheit 6 ein akustisches Sensorsystem mit einem dritten Detektionsbereich, welches mit der vorzugsweise Kl-basierten Auswerte- und Steuereinheit 7 gekoppelt ist, um die von diesem akustischen Sensorsystem erfassten Signale elektronisch mit den erfassten Signalen des Radarsystems undloder des optischen Sensorsystems elektronisch zu kombinieren und auszuwerten, und um bei Anwesenheit eines Zielobjekts, dieses zu identifizieren, dessen voraussichtliche Bewegungsrichtung zu prognostizieren und gegebenenfalls den optischen Signalgeber 5 zu aktivieren undloder ein Funksignal zu erzeugen.

In einer besonderen Weiterbildung der erfindungsgemässen Wildwarnvorrichtung umfasst die Erkennungseinheit 6 ein weiteres optisches Sensorsystem mit einem vierten Detektionsbereich, welches mit der vorzugsweise Kt-basierten Auswerte- und Steuereinheit 7 gekoppelt ist, um die von diesem weiteren optischen Sensorsystem erfassten Signale elektronisch mit den erfassten Signalen des Radarsystems und/oder des optischen Sensorsystems und/oder des akustischen Sensorsystems zu kombinieren, und um bei Anwesenheit eines Wildtiers den optischen Signalgeber 5 gegebenenfalls zu aktivieren undloder ein Funksignal zu erzeugen.

Darüber hinaus ist vorliegende Gehäuse-Baugruppe 2 mittels einer Halterungs-Baugruppe 8 an einer tragenden Struktur 9 in Strassennähe, insbesondere an einem Strassenleitpfosten, beweglich befestigbar. Mit dieser beweglichen Halterungs-Baugruppe 2 ist mindestens einer der genannten Detektionsbereiche unabhängig von der Inklination der tragenden Struktur 9 justierbar, d.h. optimal ausrichtbar.

### Referenzzeichenliste

- 1: Wildwarnvorrichtung
- 2: Gehäuse-Baugruppe
- 3: Detektionseinheit
- 4: Stromversorgungseinheit
- 5: Signalgeber
- 6: Erkennungs-Einheit
- 7: Auswerte- und Steuerelektronik
- 8: Halterungs-Baugruppe
- 9: tragende Struktur
- 11: Radarsystem, inkl. Antenne mit Sende- und Empfangs-Elektronik
- 12: emittierte Radarstrahlung / getaktetes Primärsignal
- 14: optisches Sensorsystem

- P₁,P₂: gesendete Strahlungspulse (Sendepulse)
- f₁,f₂: Sendefrequenzen der Sendepulse
- t: Pulsbreite der getakteten Sendepulse
- T₁,T₂: Taktperiode (Duty-Cycle, Zykluszeit) der getakteten Sendepulse

## Patentansprüche

1. Bodenbasierte Wildwarnvorrichtung (1) zur Erzeugung von optischen Warnsignalen, welche Wildwarnvorrichtung (1) eine Gehäuse-Baugruppe (2) umfasst, welche eine Detektionseinheit (3), eine mit dieser Detektionseinheit (3) verbindbare Stromversorgungseinheit (4), insbesondere eine autonome Stromversorgungseinheit mit einem Solarmodul und einem Akku, und einem mit dieser Detektionseinheit (3) gekoppelten optischen Signalgeber (5) aufweist, wobei die Detektionseinheit (3) mindestens eine Erkennungseinheit (6) und eine, vorzugsweise KI-basierte, Auswerte- und Steuerelektronik (7) umfasst, wobei diese Gehäuse-Baugruppe (2) mittels einer Halterungs-Baugruppe (8) an einer tragenden Struktur (9) in Strassennähe, insbesondere an einem Strassenleitpfosten, beweglich befestigbar ist,
**dadurch gekennzeichnet, dass**
diese Erkennungseinheit (6) mindestens ein Miniatur-Radarsystem (11) aufweist, dessen emittierte Strahlung, d.h. dessen Primärsignal (12) zur Reduktion des Stromverbrauchs getaktet ist.

2. Wildwarnvorrichtung nach Anspruch 1, **dadurch gekennzeichnet, dass** das getaktete Primärsignal (12) mindestens eine Folge von, mit einer vorgegebenen Taktperiode (T₁, T₂), getakteten Sendepulsen (P₁, P₂) aufweist.

3. Wildwarnvorrichtung nach Anspruch 2, **dadurch gekennzeichnet, dass** das getakteten Primärsignal (12) im CW-Modus zwei Folgen von getakteten Sendeimpulsen (P₁, P₂) aufweist, deren Taktperioden (T₁, T₂) gleich gross sind, d.h. T₁ = T₂ ist.

4. Wildwarnvorrichtung nach Anspruch 2, **dadurch gekennzeichnet, dass** das getaktete Primärsignal (12) im FSK-Modus zwei Folgen von gefakten Sendeimpulsen (P₁, P₂) aufweist, deren Taktperioden (T₁, T₂) ungleich gross sind, d.h. T₁ ≠ T₂ ist.

5. Wildwarnvorrichtung nach einem der vorgehenden Ansprüche 1 bis 4, **dadurch gekennzeichnet, dass** das Miniatur-Radarsystem (11) bei einem getakteten ersten Primärsignal (12) mit einer Strahlungsfrequenz von 24.0 GHz < f₁ < 24.25 GHz und einem Duty-Cycle von ca. 1:30 (mit bspw. einer aktiven Zeit, d.h. Pulsdauer von t = 20 µs und einer Ruhepause von T-t = 580 µs) und mit einer Reichweite von ca. 30 m einen Strombedarf von ca. 2.5 mA oder weniger aufweist.

6. Wildwarnvorrichtung nach Anspruch 5, **dadurch gekennzeichnet, dass** das Miniatur-Radarsystem (11) bei einem getakteten zweiten Primärsignal (12) mit einer Strahlungsfrequenz von 24.0 GHz < f₂ < 24.25 GHz und einem Duty-Cycle von ca. 1:30 (mit bspw. einer aktiven Zeit von t = 20 µs und einer Ruhepause von T-t = 580 µs) und mit einer Reichweite von ca. 30 m einen Strombedarf von ca. 2.5 mA oder weniger aufweist.

7. Wildwarnvorrichtung nach Anspruch 6, **dadurch gekennzeichnet, dass** die Primärsignale (12) des ersten und zweiten Radarsystems zeitlich versetzt zueinander und gleich getaktet sind.

8. Wildwarnvorrichtung nach einem der Ansprüche 1 bis 7, **dadurch gekennzeichnet, dass** das Miniatur-Radarsystem (11) einen Antennen-Array mit einem ersten Detektionsbereich von mindestens ca. 60° Azimut und von mindestens ca. 15° Elevation aufweist.

9. Wildwarnvorrichtung nach Anspruch einem der Ansprüche 1 bis 8, **dadurch gekennzeichnet, dass** das Miniatur-Radarsystem (11) mit der, vorzugsweise KI-basierten, Auswerte- und Steuereinheit (7) gekoppelt ist, um die von diesem Radarsystem (11) erfassten Signale elektronisch auszuwerten und bei Anwesenheit eines Wildtiers den optischen Signalgeber (5) zu aktivieren, um ein optisches Warnsignal und/oder ein Funksignal zu erzeugen.

10. Wildwarnvorrichtung nach Anspruch 9, **dadurch gekennzeichnet, dass** die Erkennungseinheit (6) mindestens ein optisches Sensorsystem (14) mit einem zweiten Detektionsbereich aufweist, welches mit der, vorzugsweise KI-basierten, Auswerte- und Steuereinheit (7) gekoppelt ist, um die von diesem optischen Sensorsystem (14) erfassten Signale elektronisch auszuwerten und mit den erfassten Signalen des Radarsystems (11 zu kombinieren, um bei Anwesenheit eines Wildtiers den optischen Signalgeber (5) zu aktivieren, um ein optisches Warnsignal undloder ein Funksignal zu erzeugen.

11. Wildwarnvorrichtung nach Anspruch 10, **dadurch gekennzeichnet, dass** die Erkennungseinheit (6) ein akustisches Sensorsystem mit einem dritten Detektionsbereich aufweist, welches mit der, vorzugsweise KI-basierten, Auswerte- und Steuereinheit (7) gekoppelt ist, um die von diesem akustischen Sensorsystem erfassten Signale elektronisch auszuwerten und mit den erfassten Signalen des Radarsystems und/oder des optischen Sensorsystems elektronisch zu kombinieren um bei Anwesenheit eines Wildtiers den optischen Signalgeber (5) zu aktivieren, um ein optisches Warnsignal undloder ein Funksignal zu erzeugen.

12. Wildwarnvorrichtung nach einem der Ansprüche 10 oder 11,
**dadurch gekennzeichnet, dass** die Erkennungseinheit (6) ein zusätzliches optisches Sensorsystem mit einem vierten Detektionsbereich aufweist, welches mit der, vorzugsweise KI-basierten, Auswerte- und Steuereinheit (7) gekoppelt ist, um die von diesem zusätzlichen optischen Sensorsystem erfassten Signale elektronisch auszuwerten und mit den erfassten Signalen des Radarsystems undloder des optischen Sensorsystems und/oder des akustischen Sensorsystems zu kombinieren um bei Anwesenheit eines Wildtiers den optischen Signalgeber (5) zu aktivieren, um ein optisches Warnsignal undloder ein Funksignal zu erzeugen.

13. Wildwarnvorrichtung nach einem der Ansprüche 1 bis 12, **dadurch gekennzeichnet, dass** die Gehäuse-Baugruppe (2) und damit mindestens einer der ersten bis vierten Detektionsbereiche unabhängig von der Inklination der tragenden Struktur (9) mit Hilfe der beweglichen Halterungs-Baugruppe (8) justierbar, d.h. optimal ausrichtbar sind.
